# EUROPEAN PATENT SPECIFICATION

(11) **EP 3 519 332 B1**
(45) Date of publication and mention of the grant of the patent: **02.11.2022**
(21) Application number: 17777277.9
(22) Date of filing: 29.09.2017
(51) Int. Cl.: B65G 47/51

(54) **APPARATUS AND METHOD TO MOVE MOBILE SUPPORT ELEMENTS BETWEEN TWO WORK STATIONS**
VORRICHTUNG UND VERFAHREN ZUM BEWEGEN MOBILER STÜTZELEMENTE ZWISCHEN ZWEI ARBEITSSTATIONEN
APPAREIL ET PROCÉDÉ POUR DÉPLACER DES ÉLÉMENTS DE SUPPORT MOBILES ENTRE DEUX POSTES DE TRAVAIL

(30) Priority: 30.09.2016 IT 201600098493
(43) Date of publication of application: 07.08.2019
(73) Proprietor: I.M.A. Industria Macchine Automatiche S.p.A., 40064 Ozzano Dell Emilia (Bologna) (IT)
(72) Inventor: DRAGHETTI, Fiorenzo, 40064 Ozzano dell'Emilia (IT); CAPORALE, Antonio, 40064 Ozzano dell'Emilia (IT)
(74) Representative: Petraz, Gilberto Luigi
(86) International application number: PCT/EP2017/074916
(87) International publication number: WO 2018/060506

(56) References cited:
- EP-A1- 1 422 172
- DE-A1-102013 216 823
- US-A- 5 803 702

## Description

### FIELD OF THE INVENTION

The field of the present invention is that of moving mobile support elements, such as for example trays, containers, plates, or other known elements in the state of the art, from a first work station, for example a loading station, in which each support element is loaded manually or automatically, for example by means of a first robot, with raw materials, finished products, or semi-finished products, to a second work station, for example an unloading station, in which each support element is unloaded manually or automatically, for example by means of a second robot. For example, each support element can be configured to contain in an orderly manner, in a matrix of lines and columns, a plurality of tobacco-based products such as capsules, cartridges, or suchlike, or pharmaceutical products, or other.

### BACKGROUND OF THE INVENTION

In the field of moving support elements between two work stations, various machines and apparatuses are known which, using conveyor belts, belts, lifting and translating members, are able to perform the horizontal, vertical, or inclined movement of support elements, on which objects, finished products, or semi-finished products can be disposed, to perform subsequent processing or packaging steps.

Machines and apparatuses for moving objects are also known, for example bulky objects such as mattresses or boxes for transporting suitcases. Examples of these known solutions are described in EP-A1-1,422,172 and DE-A1-102013216823.

EP-A1-1,422,172 describes a device for storing mattresses, which can be stacked vertically on respective support frames. The device comprises an entrance zone for the mattress comprising transport rollers, and an exit zone provided with a transport belt. The device also comprises an expulsion mechanism provided with a thruster to remove the mattresses, and a support platform that defines the exit zone on which the removed mattresses are received. The expulsion mechanism and the support platform are vertically mobile to move to the same height at which the mattress that is to be removed from the store can be found.

One disadvantage of this device is that it is cumbersome and functions slowly. In fact, this device is not suitable for moving objects quickly because several members have to move vertically, in a coordinated manner, in order to remove the desired mattress. It is evident that this device is not able to operate in the field of an automatic packaging line, which usually operates at very high speeds.

DE-A1-102013216823 describes a storage device for stackable containers, for example, boxes for transporting suitcases in the field of automated luggage transport systems at an airport.

The solution described in this document provides a transfer device comprising a slider which is able to hold a container to deposit it on a lifting conveyor. The latter allows to stack on it containers to be stored, which must be diverted from the container transport plane to be conveyed to a secondary storage line disposed parallel but at a lower height than said transport plane. The containers to be stored are removed from the slider, stacked on the lifting conveyor, from which the stack is subsequently moved along the secondary storage line after the lifting conveyor has lowered to the level of the secondary storage line.

One disadvantage of this solution is that it is suitable for implementation in large installations or movement lines but is not suitable for use between two work stations of an automatic machine. Another disadvantage of this solution is that it is cumbersome and very expensive.

Known machines and apparatuses have the disadvantage, however, that they are subject to frequent interruptions due to different causes such as jams, anomalies, or malfunctions of the different electromechanical members involved in the movement cycle. Consequently, if there is a problem at any point in the line, it is the whole line that must be stopped, resulting in longer processing times and increased production costs.

There is therefore a need to perfect an apparatus and a method to move mobile support elements between two work stations that can overcome at least one of the disadvantages of the state of the art.

In particular, a first purpose of the present invention is to obtain an apparatus and to perfect a method that allow to move easily and reliably, also guaranteeing high productivity, a plurality of mobile support elements, such as for example trays, containers, plates, or other known elements in the state of the art, from a first work station to a second work station.

Another purpose of the present invention is to obtain an apparatus and to perfect a method which allow to create a temporary storage zone for the support elements between the two work stations, in order to avoid interrupting the entire movement line if there is a jam in correspondence with one of the two work stations.

Patent document US 5 803 702 A discloses an apparatus for moving a plurality of mobile support elements between work stations.

The Applicant has devised, tested and embodied the present invention to overcome the shortcomings of the state of the art and to obtain these and other purposes and advantages.

### SUMMARY OF THE INVENTION

The present invention is set forth and characterized in the independent claims, while the dependent claims describe other characteristics of the invention or variants to the main inventive idea.

In accordance with the above purposes, some embodiments concern an apparatus to move a plurality of mobile support elements between a first work station and a second work station along a closed path. The apparatus comprises first guide means configured to slidingly support and guide the support elements disposed between the two work stations along a segment of said path and lying on a first horizontal plane.

In accordance with one embodiment, the apparatus also comprises second guide means configured to slidingly support and guide the support elements, disposed between the two work stations along another segment of said path and lying on a second horizontal plane located at a determinate vertical distance from the first horizontal plane. Moreover, between the first work station and the second work station movement means are provided configured to move the support elements between the first horizontal plane and the second horizontal plane in an intermediate zone provided between the first work station and the second work station and between the two horizontal planes. In the intermediate zone it is provided to lift or lower, and possibly vertically stack the support elements so that in the intermediate zone a temporary vertical store of the support elements is defined. The first guide means are disposed between the first work station and the base of the intermediate zone disposed in proximity to the first horizontal plane, and the second guide means are disposed between the upper part of the intermediate zone disposed in proximity to the second horizontal plane and the second work station.

In accordance with another embodiment, the movement means comprise lifting means that are disposed in the intermediate zone to selectively lift the support elements between the first horizontal plane and the second horizontal plane.

In accordance with another embodiment, the lifting means comprise a vertically mobile slider on which first temporary support means are mounted, configured to selectively cooperate with the support elements.

In accordance with another embodiment, second temporary support means are provided to temporarily support the support elements in an intermediate position between the first horizontal plane and the second horizontal plane in order to form in the intermediate zone, in coordination with the movement means, a vertical stack of support elements.

In accordance with another embodiment, a temporary support mechanism is provided in the upper part of the intermediate zone to temporarily support, one at a time, the support elements taken by the movement means onto the second horizontal plane.

In accordance with another embodiment, the apparatus also comprises third guide means disposed parallel and coplanar to the second guide means to guide the support elements from the second work station to the intermediate zone, and fourth guide means disposed parallel and coplanar to the first guide means to guide the support elements from the intermediate zone to the first work station.

In accordance with another embodiment, lowering means are provided in the intermediate zone, between the third guide means and the fourth guide means, in order to selectively lower the support elements from the second horizontal plane to the first horizontal plane.

Other embodiments concern a method to move a plurality of mobile support elements between a first work station and a second work station along a closed path. According to one embodiment, the method comprises at least a first step in which the support elements are guided by first guide means lying on a first horizontal plane to an intermediate zone comprised between the two work stations, a second step in which the support elements are moved vertically by movement means in the intermediate zone between the first horizontal plane and a second horizontal plane located at a determinate vertical distance from the first horizontal plane, in order to possibly stack the support elements vertically, defining a temporary vertical store of the support elements, and a third step in which the support elements are guided by the second guide means lying on the second horizontal plane from the upper part of the intermediate zone toward the second work station.

In accordance with another embodiment, the method also comprises a fourth step in which the support elements that are on the second horizontal plane downstream of the second work station are translated toward third guide means disposed parallel and coplanar to the second guide means to guide the support elements from the second work station to the upper part of the intermediate zone, and a fifth step in which the support elements are selectively lowered from the second horizontal plane to the first horizontal plane and then moved onto fourth guide means disposed parallel and coplanar to the first guide means from the base of the intermediate zone to the first work station.

In one implementation, the method provides to move the support elements between the first work station and the second work station along a closed path formed by an outward path and by a return path between the first work station and the second work station. The outward path comprises a first segment that lies on the first horizontal plane from the first work station to the intermediate zone and a second segment that lies on the second horizontal plane from the intermediate zone to the second work station. The return path comprises a first segment that lies on the second horizontal plane from the second work station to the intermediate zone and a second segment that lies on the first horizontal plane from the intermediate zone to the first work station.

In one embodiment, the method described here provides to move the support elements between the first and the second work stations keeping the sequential order of the support elements during their movement along the closed path. In this way, the method is able to implement a storing system of the "FIFO" type, that is, "First In First Out".

In one embodiment, the method described here provides to move a constant number of support elements between the first and the second work stations along the closed path.

These and other aspects, characteristics and advantages of the present disclosure will be better understood with reference to the following description, drawings and attached claims. The drawings, which are integrated and form part of the present description, show some forms of embodiment of the present invention, and together with the description, are intended to describe the principles of the disclosure.

The various aspects and characteristics described in the present description can be applied individually where possible. These individual aspects, for example aspects and characteristics described in the attached dependent claims, can be the object of divisional applications.

It is understood that any aspect or characteristic that is discovered, during the patenting process, to be already known, shall not be claimed and shall be the object of a disclaimer.

### BRIEF DESCRIPTION OF THE DRAWINGS

These and other characteristics of the present invention will become apparent from the following description of some embodiments, given as a non-restrictive example with reference to the attached drawings wherein:
- fig. 1 is a three-dimensional view of an apparatus to move a plurality of support elements between two work stations according to the present invention;
- fig. 2 is a plan view of a support element configured to be moved by the apparatus in fig. 1;
- fig. 3 is a front view of the support element in fig. 2;
- fig. 4 is a plan view of the apparatus in fig. 1;
- fig. 5 is a partly sectioned front view of the apparatus in fig. 1;
- fig. 6 is a left front view, three-dimensional and on an enlarged scale, of a first detail of the apparatus in fig. 1;
- fig. 7 is a right front view, three-dimensional, of the detail in fig. 6;
- fig. 8 is a left side view of the detail in fig. 6;
- fig. 9 is a partly sectioned rear view of the detail in fig. 6;
- fig. 10 is a plan view on an enlarged scale of a second detail of the apparatus in fig. 1;
- fig. 11 is a perspective and schematic view of the apparatus in fig. 1 in a working step;
- fig. 12 is a front schematic view of the apparatus in fig. 1 in a working step;
- fig. 13 is a rear schematic view of the apparatus in fig. 1 in a working step.

To facilitate comprehension, the same reference numbers have been used, where possible, to identify identical common elements in the drawings. It is understood that elements and characteristics of one embodiment can conveniently be incorporated into other embodiments without further clarifications.

### DETAILED DESCRIPTION OF SOME EMBODIMENTS

We shall now refer in detail to the various embodiments of the present invention, of which one or more examples are shown in the attached drawings. Each example is supplied by way of illustration of the invention and shall not be understood as a limitation thereof. For example, the characteristics shown or described insomuch as they are part of one embodiment can be adopted on, or in association with, other embodiments to produce another embodiment. It is understood that the present invention shall comprise all such modifications and variants.

Before describing these embodiments, we must also clarify that the present description is not limited in its application to details of the construction and disposition of the components as described in the following description using the attached drawings. The present description can provide other embodiments and can be obtained or executed in various other ways.

It should be noted that in the present description and in the claims the terms high, low, vertical, horizontal, upper, lower and internal, with their declinations, have the sole function of better illustrating the present invention with reference to the drawings, and must not be used in any way to limit the field of the invention itself, or the field of protection defined by the claims. For example, with the term horizontal, it is intended to indicate a plane that can be both parallel to the line of the horizon and also inclined, even by several degrees, for example up to 20°, with respect to the latter.

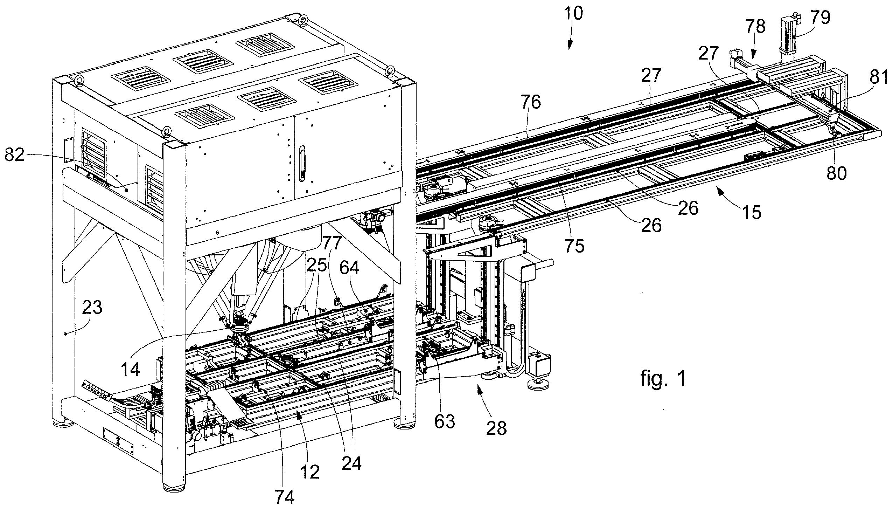

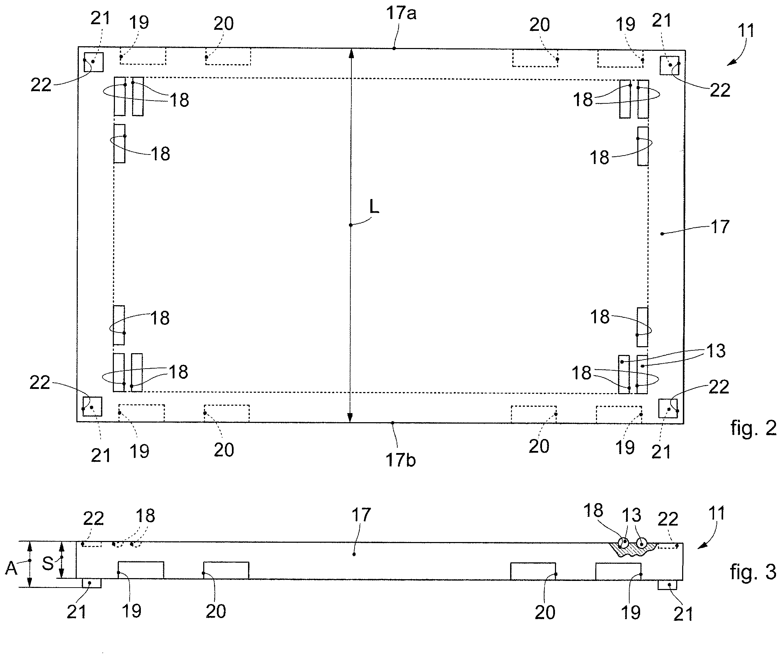

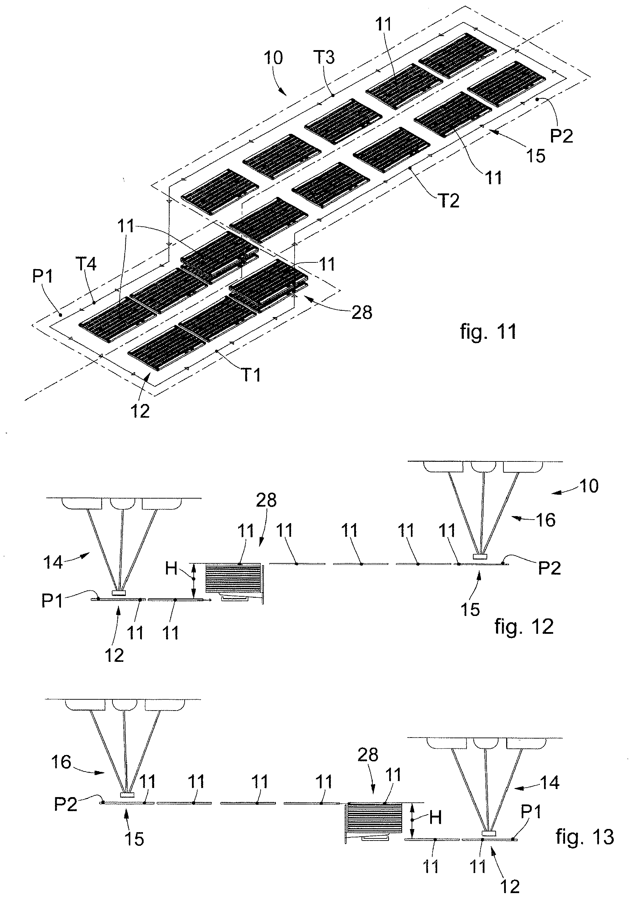

With reference to fig. 1, an apparatus 10 according to embodiments described here is configured to move a plurality of support elements 11 (figs. 2 and 3) between a first work station 12 (fig. 1), which in the example provided here is a loading station for tobacco-based products 13 (figs. 2 and 3) in the form of capsules, equipped with a first robot 14 (fig. 1) of a known type, and a second work station 15, which in the example provided here is an unloading station for the products 13, for example equipped with a second robot 16 (figs. 12 and 13).

In the embodiments described here, the apparatus 10 is configured to move the plurality of support elements 11 between the two work stations 12, 15 along a closed path.

In a preferred embodiment, the closed path is formed by an outward path from the first work station 12 to the second work station 15, and by a return path from the second work station 15 to the first work station 12.

Each support element 11 (figs. 2 and 3) comprises a substantially rectangular shaped plate 17 made of rigid material, for example a suitable plastic material such as ABS (acrylonitrile-butadiene-styrene) or metal, such as aluminum, and having a thickness S comprised, for example, between about 8mm and about 20mm. The width L of each plate 17 and therefore of each support element 11 is comprised, for example, between about 200mm and about 400mm.

The upper surface of the plate 17 comprises a plurality of niches 18 disposed, for example, in an orderly matrix of rows and columns, inside each of which a product 13 is suitable to be temporarily inserted.

The plate 17 thus serves as a tray and is shaped so as to have, on each of the two larger opposite sides 17a and 17b, two pairs of first hollows 19, parallel to each other, and two pairs of second hollows 20, also parallel to each other and more central with respect to the hollows 19. The eight hollows 19 and 20 are open downward and are configured to be engaged by other members of the apparatus 10 as will be described hereafter.

The plates 17 are configured to be stacked one on top of the other to form a vertical stack, as will be described below in more detail. In order to prevent the top plate 17 in the stack from crushing the products 13 inserted in the plate 17 immediately below, each plate 17, in its lower part, is provided with four spacer feet 21, configured to enter into corresponding seatings 22 made in the upper surface.

The overall height A of each support element 11, including the spacer feet 21, is for example comprised between about 8 mm and about 20 mm.

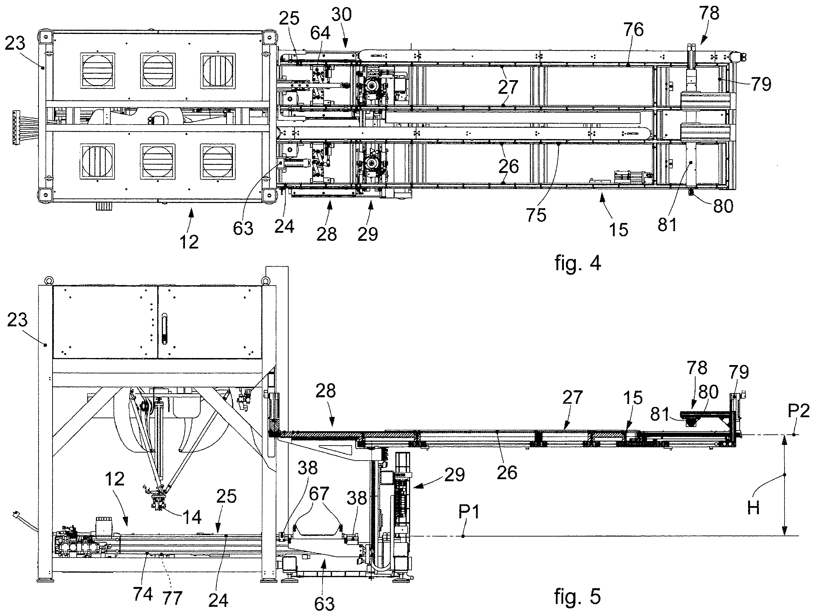

The apparatus 10 (figs. 1, 4 and 5) comprises a frame 23, for example made of metal, having first guide means 24 and 25 that lie on a first horizontal plane P1 (fig. 5) and second guide means 26 and 27 that lie on a second horizontal plane P2, located at a height H between 500mm and 800mm from the first horizontal plane P1 (fig. 5).

It should be noted that in the embodiments described here, the first horizontal plane P1 and the second horizontal plane P2 are fixed, that is, they cannot modify their position in a vertical direction. Between the planes P1, P2 a vertical height difference is maintained, for example equal to said height H.

In one embodiment, the first guide means comprise a first and a fourth pair of guides 24 and 25 disposed parallel and coplanar to each other to guide the support elements 11 on the first horizontal plane P1 and the second guide means comprise a second and a third pair of guides 26 and 27 disposed parallel and coplanar to each other to guide the support elements 11 on the second horizontal plane P2.

The length of the two pairs of guides 24 and 25 is such as to allow the longitudinal alignment, on each of them, of at least three support elements 11 (fig. 11), separated from each other by a few millimeters, while the length of the two pairs of guides 26 and 27 is such as to allow the longitudinal alignment, on each of them, of at least five support elements 11, also separated from each other by a few millimeters.

The first pair of guides 24 (fig. 5) is configured to support the support elements 11 slidingly and guide them along a first segment T1 (fig. 11) of an outward path in the first horizontal plane PI, from the first station work 12 to an intermediate zone 28 provided between the first work station 12 and the second work station 15 and comprised between the first horizontal plane P1 and the second horizontal plane P2.

According to embodiments described here, in the intermediate zone 28 it is provided to raise or lower, and possibly vertically stack, the support elements 11. The intermediate zone thus defines a vertical temporary store, or buffer, for the support elements 11, each containing the products 13, as will be described in detail below. In other words, the intermediate zone 28 can be a temporary storage zone in which to store and accumulate a desired number of support elements 11 in case, for causes of different nature, such as jams, anomalies, or malfunctions, interruptions of the line upstream or downstream of the intermediate zone 28 itself occur. In this way, by exploiting the support elements 11 previously accumulated in the temporary store, it is possible to keep the part of the line respectively downstream or upstream of the intermediate zone 28 operative without affecting productivity.

The second pair of guides 26 is instead configured to support the support elements 11 slidingly and guide them along a second segment T2 of the outward path, in the second horizontal plane P2, from the intermediate zone 28 to the second work station 15.

The third pair of guides 27, which is parallel and adjacent to the second pair of guides 26, is configured to slidingly support and guide the support elements 11, without products 13 because they have already been removed by the second robot 16, along a first segment T3 of a return path, in the second horizontal plane P2, from the second work station 15 to the intermediate zone 28.

The fourth pair of guides 25, which is parallel and adjacent to the first pair of guides 24, is configured to slidingly support and guide the empty support elements 11, along a second segment T4 of the return path, in the first horizontal plane PI, from the intermediate zone 28 to the first work station 12.

According to embodiments of the apparatus 10 described here, the outward path and the return path in their entirety form a closed path.

In preferred embodiments, it is provided that a constant number of support elements 11, for example at least sixteen support elements 11, is moved on the entire closed path.

In the intermediate zone 28 the apparatus 10 comprises movement means 29, 30 configured to move the support elements 11 between the first horizontal plane P1 and the second horizontal plane P2.

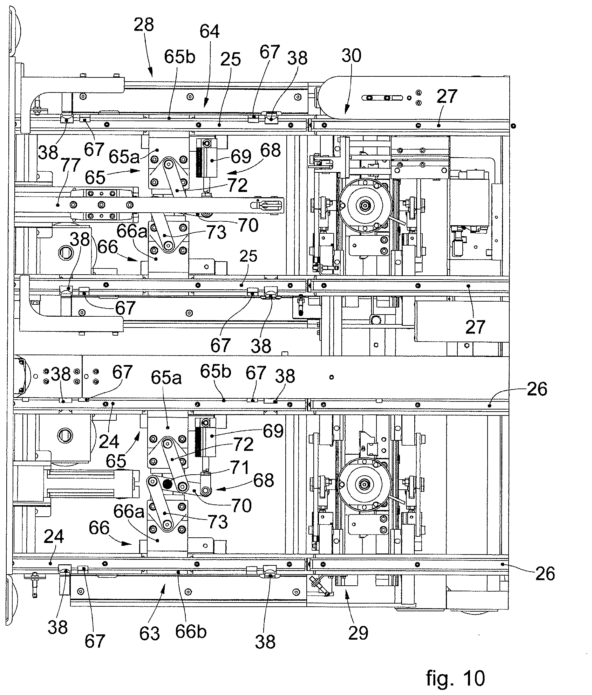

In embodiments described here, the movement means comprise both a lifting device 29 (figs. 4 and 5) configured to vertically lift the support elements 11 that are at the end of said first segment T1 of the outward path from the first horizontal plane P1 to the second horizontal plane P2, and also a similar lowering device 30 (figs. 4 and 10), configured to vertically lower the support elements 11 that are at the end of said first segment T3 of the return path from the second horizontal plane P2 to the first horizontal plane P1, as will be described in detail below.

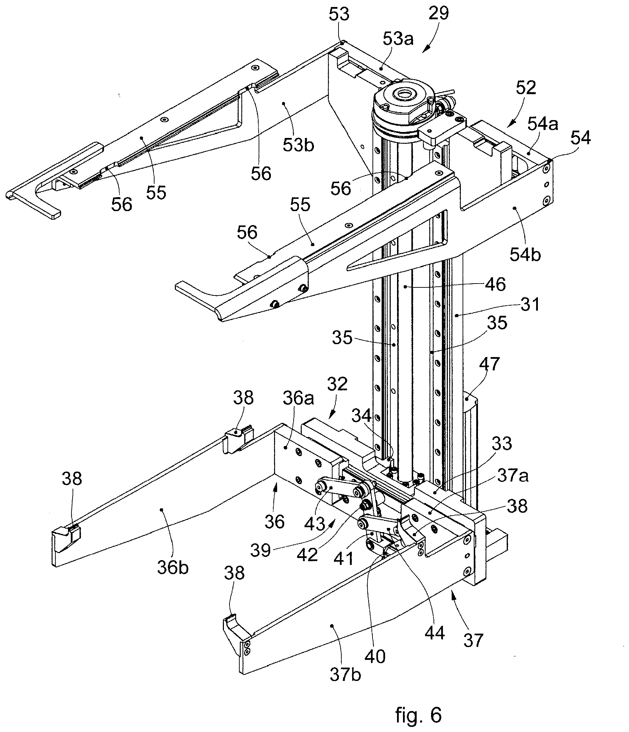

The lifting device 29 (figs. 6 to 9) comprises a vertical upright 31 that serves as a guide for a substantially U-shaped slider 32, slidable vertically between the two horizontal planes P1 and P2.

The slider 32 comprises a transverse plate 33 provided with blocks 34 for easy sliding along vertical guides 35 of the vertical upright 31. On the transverse plate 33, two first L-shaped temporary support members 36 and 37 are mounted, slidable transversely, lying on a horizontal plane and each having a transverse part 36a, respectively 37a, and a longitudinal arm 36b, respectively 37b. Each longitudinal arm 36b and 37b is provided with two teeth 38 protruding toward the inside and positioned so as to selectively enter into the four first hollows 19 (figs. 2 and 3) of a plate 17 when the latter is in the intermediate zone 28.

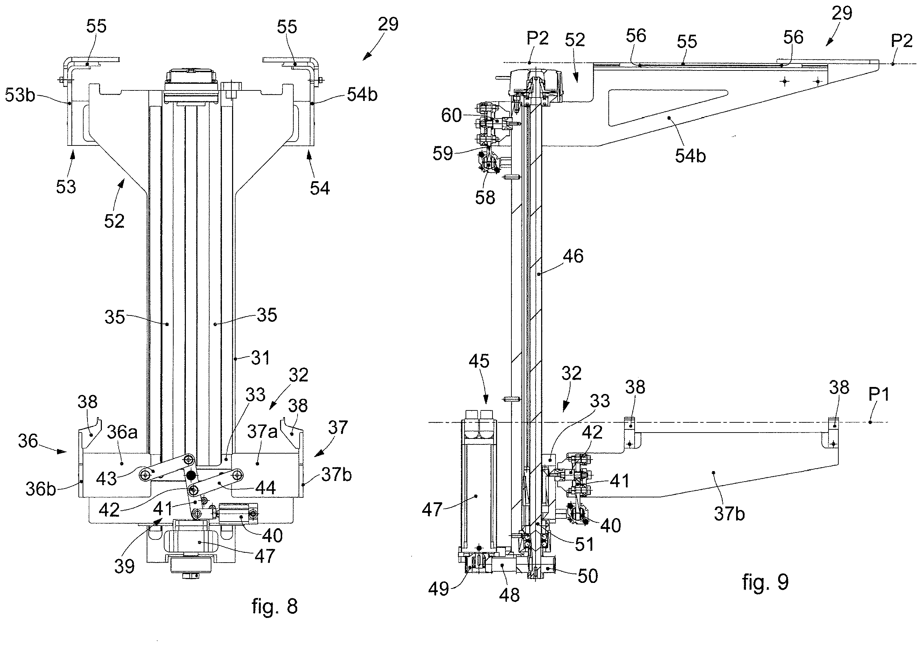

The slider 32 (figs. 6 and 8) also comprises a first actuation mechanism 39, configured to selectively move the two first temporary support members 36 and 37 nearer to or away from each other, between an inactive position in which they are not engaging with any support element 11, and a work position in which they engage one of the support elements 11 to move it vertically between said first horizontal plane P1 and said second horizontal plane P2.

In particular, in the inactive position, the two first temporary support members 36 and 37 are distanced so as to allow the corresponding plate 17 to pass freely between the longitudinal arms 36b and 37b without interfering with the teeth 38, while in the work position the two first temporary support members 36 and 37 are moved nearer to each other, so that the four teeth 38 are inserted in the corresponding first hollows 19 of the corresponding plate 17.

The first actuation mechanism 39 comprises a first linear actuator 40, drivable electrically, which is connected to the lower end of a lever 41 pivoted to a pin 42 attached on the transverse plate 33 and connected on opposite sides with respect to the pin 42, to the transverse parts 36a and 37a of the first temporary support members 36 and 37, by means of two connection levers 43 and 44.

The slider 32 is configured to be selectively lifted and lowered vertically between the two horizontal planes P1 and P2 by means of a lifting mechanism 45 (fig. 9) which comprises a vertical screw 46 driven by a reversible electric motor 47, by means of a transmission belt 48 and corresponding pulleys 49 and 50. A female screw 51, attached to the transverse plate 33, is constantly engaged with the vertical screw 46.

At the upper end of the vertical upright 31 a temporary support mechanism 52 is disposed (figs. 6 to 9), configured to temporarily support a support element 11 when it reaches the second horizontal plane P2 arriving from the first horizontal plane P1.

The temporary support mechanism 52 comprises two second L-shaped temporary support members 53 and 54, lying on a horizontal plane and each having a transverse part 53a, respectively 54a, and a longitudinal arm 53b, respectively 54b. Each longitudinal arm 53b and 54b is provided with a horizontal plate 55 disposed coplanar to the second pair of guides 26, that is, to the second horizontal plane P2. On its internal lateral edge, each horizontal plate 55 is provided with two slits 56 vertically aligned with the teeth 38 and wide enough to allow the latter to pass through them, with play.

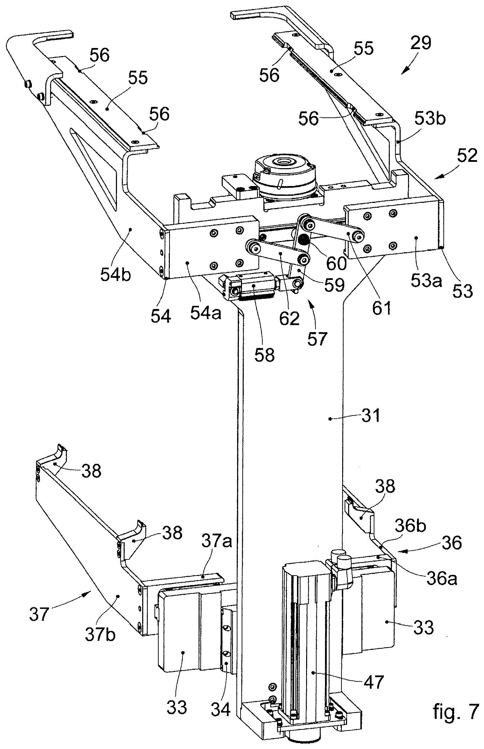

The temporary support mechanism 52 also comprises a second actuation mechanism 57 (fig. 7), configured to selectively move the two second temporary support members 53 and 54 nearer to or away from each other, between an inactive position where the latter are distanced from each other so that the gap between the two horizontal plates 55 is greater than the width L of the support element 11, so as to allow the latter to pass freely when the slider 32 is lifted by the lifting device 29, and an operating position in which the two second temporary support members 53 and 54 are moved nearer to each other, so that the two horizontal plates 55 are aligned longitudinally with the second pair of guides 26.

The second actuation mechanism 57 comprises a second linear actuator 58, electrically drivable, which is connected to the lower end of a lever 59 pivoted to a pin 60 attached on the vertical upright 31 and connected, on opposite sides with respect to the pin 60, to the transverse parts 53a and 54a of the second temporary support members 53 and 54 by means of two connection levers 61 and 62.

The lowering device 30 (fig. 4) is identical to the lifting device 29 and therefore, for brevity, it is not described in detail here.

The apparatus 10 also comprises two temporary support devices 63 and 64 (figs. 1, 4 and 10), identical to each other and disposed adjacent and coplanar in the lower part of the intermediate zone 28, one in correspondence with the lifting device 29 and the other in correspondence with the lowering device 30.

Each of the two temporary support devices 63 and 64 comprises a pair of L-shaped temporary support members 65 and 66, lying on a vertical plane and each having a horizontal part 65a, respectively 66a, and a longitudinal arm 65b, respectively 66b. Each longitudinal arm 65b and 66b is provided with two teeth 67 disposed between the teeth 38, distanced in height from the latter, for example by about 20 mm, protruding toward the inside and positioned so as to selectively enter into the four second hollows 20 (figs. 2 and 3) of a plate 17, when the latter is in the intermediate zone 28, as will be described in detail below.

Each of the two temporary support devices 63 and 64 also comprises an actuation mechanism 68, configured to selectively move the temporary support members 65 and 66 nearer to or away from each other, between an inactive position in which they are not engaged with any support element 11, and a work position in which they engage with one of the support elements 11 to move it to an intermediate position between the first horizontal plane P1 and the second horizontal plane P2.

In particular, in said inactive position, the temporary support members 65, 66 are distanced so as to allow the corresponding plate 17 to pass freely between the longitudinal arms 65b and 66b without interfering with the teeth 67, while in the work position they are moved nearer to each other so that the four teeth 67 are inserted in the corresponding second hollows 20 of the corresponding plate 17, when the latter is on the same horizontal plane as they are.

The actuation mechanism 68 comprises a linear actuator 69, electrically drivable, which is connected to the lower end of a lever 70 pivoted on a vertical pin 71 attached to the frame 23 and connected, on opposite sides with respect to the pin 71, to the transverse parts 65a and 66a by means of two connection levers 72 and 73.

The apparatus 10 also comprises: first horizontal feed means 74 (figs. 1 and 5), which can be of any known type, such as for example linear actuators, configured to translate the support elements 11 horizontally on the first horizontal plane P1 on the first pair of guides 24 from the first work station 12 to the intermediate zone 28; second horizontal feed means 75 (figs. 1 and 4), for example, consisting of feed belts and configured to translate the support elements 11 horizontally on the second horizontal plane P2 on the second pair of guides 26 from the intermediate zone 28 to the second work station 15; third horizontal feed means 76 (figs.. 1 and 4), also consisting, for example, of feed belts, and configured to translate the support elements 11 horizontally on the second horizontal plane P2 on the third pair of guides 27 from the second work station 15 to the intermediate zone 28; and fourth horizontal feed means 77 (figs. 5 and 10), also consisting, for example, of linear actuators, and configured to translate the support elements 11 horizontally on the first horizontal plane P1 on the fourth pair of guides 25 from the second work station 15 to the intermediate zone 28.

Furthermore, at the end of the second work station 15, a translation device 78 (figs. 1, 4 and 5) is disposed, which comprises an electric motor 79 associated with a thruster element 80 slidable on a guide bar 81 disposed transversely.

The different electromechanical components of the apparatus 10 are controlled and commanded by a programmable processor of the known type, not shown in the drawings, which can be disposed, for example, inside a compartment 82 (fig. 1) located above the first work station 12.

The functioning of the apparatus 10 described here, which also defines the method to move the support elements 11 between the two work stations 12 and 15 is as follows.

We must clarify that we will now describe the cycle of a single support element 11, although the apparatus 10 can simultaneously process a plurality of support elements 11, disposed one after the other and distanced from each other by a few millimeters along the segments T1, T2, T3 and T4 (fig. 11).

In a first step, after being loaded with products 13 by the first robot 14 in the first work station 12, a support element 11 is translated by the first horizontal feed means 74 along the first segment T1 of the outward path, guided by the first pair of guides 24, keeping itself on the first horizontal plane PI, until it arrives in the intermediate zone 28.

With the support element 11 stationary in this position, in a second step the first linear actuator 40 (fig. 6) is activated, which causes the movement of the first temporary support members 36 and 37 toward the inside, to their work position, and then the insertion of the four teeth 38 into the corresponding first hollows 19 of the plate 17 (figs. 2 and 3).

The electric motor 47 (figs. 8 and 9) is then activated, which causes the upward movement of the slider 32, which takes with it the support element 11, up to the second horizontal plane P2, between the horizontal plates 55 which are in their inactive position, that is, spread apart.

The second linear actuator 58 (fig. 7) is then activated, which causes the movement of the horizontal plates 55, which move nearer to each other and thus into their operating position below the plate 17, without interfering with the teeth 38, which are housed in the slits 56.

At this point, by keeping the horizontal plates 55 in their operating position, the command to the electric motor 47 is reversed and the slider 32 is lowered (fig. 9) until it is returned to its initial position on the first horizontal plane P1. The first linear actuator 40 is also driven to return the first temporary support members 36 and 37 into their inactive position.

At the same time, in a third step, the support element 11 that is located on the second horizontal plane P2 is translated by the second horizontal feed means 75 (fig. 4) along the second segment T2 of the outward path, guided by the second pair of guides 26, to the second work station 15, where the second robot 16 then unloads the products 13.

At the same time, two other support elements 11 have started their cycle and are gradually translated on the first horizontal plane P1 from the first work station 12 towards the intermediate zone 28, along the first segment T1 of the outward path.

After being completely unloaded by the second robot 16, the support element 11 that is located on the second horizontal plane P2 is translated in a fourth step by the translation device 78 to the third pair of guides 27 and then made to advance by the third horizontal feed means 76, along the first segment T3 of the return path, toward the lowering device 30 situated in the intermediate zone 28.

In a fifth step, with a reverse operation to the lifting operation described above, the lowering device 30 returns the empty support element 11 to the first horizontal plane P1, where the fourth horizontal feed means 77 translate it along the second segment T4 of the return path to the first work station 12 so that it can start a new cycle, after it has been moved transversely to its initial loading position.

If, for any reason or because of malfunction, it were to be necessary to accumulate support elements 11 full of products 13 before the second segment T2 of the outward path, or empty before the second segment T4 of the return path, the device 10 allows to accumulate support elements 11 in the intermediate zone 28, both in correspondence with the lifting device 29 and also, similarly but in reverse, in correspondence with the lowering device 30.

To do this, the temporary support devices 63 and 64 are respectively activated as follows.

In the first case, a first support element 11, when it arrives in the intermediate zone 28 from the first work station 12, is lifted by the lifting device 29 in the manner described above, but only by about 20 mm, that is, until the plate 17 (fig. 3) with its second hollows 20 is taken to the height of the teeth 67 (fig. 10) of the longitudinal arms 65b and 66b of the temporary support members 65 and 66.

The linear actuator 69 is then activated, which causes the two temporary support members 65 and 66 to be move nearer to each other, so that the corresponding four teeth 67 go inside the second hollows 20 (fig. 3) of the plate 17, without interfering with the teeth 38 of the lifting device 29, which are in the first hollows 19 of the same plate 17.

By keeping the two temporary support members 65 and 66 in this operating position, the slider 32 is lowered and the first actuation mechanism 39 returns the two first temporary support members 36 and 37 into the inactive position.

By keeping the first support element 11 still lifted with respect to the first horizontal plane PI, a second support element 11 is translated from the first work station 12 to the intermediate zone 28 and is lifted until it is taken into contact with the first support element 11, which is held in the raised position by the teeth 67.

Then, using the teeth 38 of the lifting device 29 to temporary keep raised both the second support element 11 and also the first support element 11 that is above it, the teeth 67 of the two temporary support members 65 and 66 are moved away from the first support element 11. Then, both the support elements 11 that are one on top of the other are lifted until the second hollows 20 of the plate 17 of the second support element 11 move in correspondence with the teeth 67 of the two temporary support members 65 and 66. The latter are then activated so that their teeth 67 are inserted into the second hollows 20 of the plate 17 of the second support element 11.

The slider 32 is then lowered and the stacking operation is possibly repeated, from the bottom to the top, of other support elements 11 until the distance H is reached (fig. 12). In this way, a temporary vertical store of the support elements 11 can be defined in the intermediate zone 28.

The unloading operation is performed in the inverse manner, unloading the stacked support elements 11 one at a time, starting from the one at the top, lifting the stack sufficiently until the support element 11 cooperates with the plates 55, as described above.

Similarly, but in reverse, that is, from top to bottom, the operation of stacking the support elements 11 is performed in the intermediate zone 28, in correspondence with the lowering device 30.

It should be noted that the method to move the support elements 11 between the two work stations 12 and 15 according to the present description allows to move the support elements 11 in an orderly manner. In other words, the method to move the support elements 11 provides to maintain the sequential order of the latter, implementing the so-called "FIFO" system, according to which the first element entering the system is also the first element that leaves it.

It is clear that modifications and/or additions of parts can be made to the apparatus 10 and corresponding method as described heretofore, without departing from the field and scope of the present invention, which is defined by the appended claims.

It is also clear that, although the present invention has been described with reference to some specific examples, a person of skill in the art shall certainly be able to achieve many other equivalent forms of apparatus and method to move mobile support elements between two work stations, having the characteristics as set forth in the claims and hence all coming within the field of protection defined thereby.

In the following claims, the sole purpose of the references in brackets is to facilitate reading: they must not be considered as restrictive factors with regard to the field of protection claimed in the specific claims.

## Claims

1. Apparatus to move a plurality of mobile support elements (11) between a first work station (12) and a second work station (15) along a closed path, said apparatus comprising first guide means (24, 25) configured to slidingly support and guide said support elements (11) disposed between said two work stations (12, 15) along a segment (T1, T4) of said path lying on a first horizontal plane (PI); said apparatus also comprises second guide means (26, 27) configured to slidingly support and guide said support elements (11) disposed between said two work stations (12, 15) along another segment (T2, T3) of said path lying on a second horizontal plane (P2) located at a vertical distance (H) from said first horizontal plane (P1), movement means (29, 30) configured to move said support elements (11) between said first horizontal plane (P1) and said second horizontal plane (P2) to an intermediate zone (28) provided between said first work station (12) and said second work station (15) and comprised between said two horizontal planes (P1, P2), it being provided, in said intermediate zone (28), to lift or lower, and possibly vertically stack said support elements (11), said intermediate zone (28) defining a temporary vertical store of said support elements (11), said first guide means (24, 25) being disposed between said first work station (12) and the base of said intermediate zone (28) disposed in proximity to said first horizontal plane (P1), and said second guide means (26, 27) being disposed between the upper part of said intermediate zone (28) disposed in proximity to said second horizontal plane (P2) and said second work station (15); wherein said apparatus comprises a translation device (78) disposed at the end of said second work station (15) and comprising an electric motor (79) associated with a thruster element (80) slidable on a guide bar (81) disposed transversely, to translate said support elements (11) located on said second horizontal plane (P2) to a third pair of guides (27) comprised in said second guide means (26, 27), wherein third horizontal feed means (76) are provided to advance said support elements (11) along the first segment (T3) of the return path toward said movement means (29, 30) situated in said intermediate zone (28).

2. Apparatus as in claim 1, **characterized in that** said movement means comprise lifting means (29) that are disposed in said intermediate zone (28) to selectively lift said support elements (11) between said first horizontal plane (P1) and said second horizontal plane (P2).

3. Apparatus as in claim 2, **characterized in that** said lifting means (29) comprise a vertically mobile slider (32) on which first temporary support means (36, 37) are mounted, configured to selectively cooperate with said support elements (11).

4. Apparatus as in claim 3, **characterized in that** said slider (32) comprises a first actuation mechanism (39) configured to selectively move said first temporary support means (36, 37) nearer to or away from each other, between an inactive position, in which they are not engaged with any of said support elements (11), and a work position, in which they engage with one of said support elements (11) in order to move it vertically between said first horizontal plane (P1) and said second horizontal plane (P2).

5. Apparatus as in claim 3 or 4, **characterized in that** said lifting device (29) comprises a vertical upright (31) that acts as a guide for said slider (32), said slider (32) comprises a transverse plate (33) provided with blocks (34) to slide along vertical guides (33) of said vertical upright (31); two first temporary support members (36, 37) conformed as an L-shape, are mounted, sliding transversely, on said transverse plate (33), lying on a horizontal plane and each having a transverse part (36a, 37a) and a longitudinal arm (36b, 37b) provided with two teeth (38) protruding toward the inside and positioned so as to selectively enter into respective first hollows (19) of a plate (17) comprised in said support elements (11).

6. Apparatus as in any claim hereinbefore, **characterized in that** second temporary support means (63, 64) are provided to temporarily support said support elements (11) in an intermediate position between said first horizontal plane (P1) and said second horizontal plane (P2) in order to form on said intermediate zone (28), in coordination with said movement means (29), a vertical stack of said support elements (11).

7. Apparatus as in claim 6, **characterized in that** each of said second temporary support means (63, 64) comprises an actuation mechanism (68), configured to selectively move said second temporary support means (63, 64) nearer to or away from each other, between an inactive position, in which they are not engaged with any of said support elements (11), and a work position, in which they are engaged with one of said support elements (11) in order to move it into said intermediate position.

8. Apparatus as in claim 6, or claim 7 when claim 6 depends on claim 5, **characterized in that** each of said second temporary support means (63, 64) comprises a pair of L-shaped temporary support members (65, 66), lying on a vertical plane and each having a horizontal part (65a, 66a), and a longitudinal arm (65b, 66b), each longitudinal arm (65b 66b) being provided with two teeth (67), disposed between said teeth (38), distanced in height from the latter, protruding toward the inside and positioned so as to selectively enter into respective second hollows (20) of said plate (17).

9. Apparatus as in any claim hereinbefore, **characterized in that** a temporary support mechanism (52) is provided in the upper part of said intermediate zone (28) to temporarily support, one at a time, said support elements (11) taken by said movement means (29) onto said second horizontal plane (P2).

10. Apparatus as in any claim hereinbefore, **characterized in that** said first guide means comprise a first pair of guides (24) and a fourth pair of guides (25), parallel and coplanar with respect to each other, to guide said support elements (11) on said first horizontal plane (P1), and said second guide means comprise a second pair of guides (26) and a third pair of guides (27) disposed parallel and coplanar with respect to each other, to guide said support elements (11) on said second horizontal plane (P2).

11. Apparatus as in claim 10, **characterized in that** said third pair of guides (27) is disposed parallel and coplanar to said second pair of guides (26) to guide said support elements (11) from said second work station (15) to said intermediate zone (28), and said fourth pair of guides (25) is disposed parallel and coplanar to said first pair of guides (24) to guide said support elements (11) from said intermediate zone (28) to said first work station (12).

12. Apparatus as in any claim hereinbefore, **characterized in that** said closed path is formed by an outward path from said first work station (12) to said second work station (15) and by a return path from said second work station (15) to said first work station (12); wherein said outward path comprises a first segment (T1) that lies on said first horizontal plane (P1) from said first work station (12) to said intermediate zone (28) and a second segment (T2) that lies on said second horizontal plane (P2) from said intermediate zone (28) to said second work station (15) and said return path comprises a first segment (T3) that lies on said second horizontal plane (P2) from said second work station (15) to said intermediate zone (28) and a second segment (T4) that lies on said first horizontal plane (P1) from said intermediate zone (28) to said first work station (12).

13. Apparatus as in any of the claims from 10 to 12, when claim 12 depends on claim 10 or 11, **characterized in that** said movement means comprise lowering means (30), which are provided in said intermediate zone (28), between said third pair of guides (27) and said fourth pair of guides (25), in order to selectively lower said support elements (11) from said second horizontal plane (P2) to said first horizontal plane (P1).

14. Apparatus as in claim 13 in combination with any of the claims from 2 to 12, **characterized in that** said lowering means (30) are the same as said lifting means (29).

15. Method to move a plurality of mobile support elements (11) between a first work station (12) and a second work station (15) along a closed path, **characterized in that** it comprises at least a first step in which said support elements (11) are guided by first guide means (24) lying on a first horizontal plane (P1) to an intermediate zone (28) comprised between said two work stations (12, 15), a second step in which said support elements (11) are moved vertically by movement means (29, 30) in said intermediate zone (28) between said first horizontal plane (P1) and a second horizontal plane (P2) located at a vertical distance (H) from said first horizontal plane (P1), in order to possibly stack said support elements (11) vertically, defining a temporary vertical store of said support elements (11), a third step in which said support elements (11) are guided by said second guide means (26) lying on said second horizontal plane (P2) from the upper part of said intermediate zone (28) toward said second work station (15),a fourth step in which said support elements (11) that are on said second horizontal plane (P2) downstream of said second work station (15) are translated, by translation device (78) disposed at the end of said second work station (15), toward a third pair of guides (27) comprised in said second guide means and disposed parallel and coplanar to a second pair of guides (26) comprised in said second guide means to guide said support elements (11) on one segment (T3) of the return path from said second work station (15) to the upper part of said intermediate zone (28), and a fifth step in which said support elements (11) are moved vertically between said second horizontal plane (P2) and said first horizontal plane (P1) and then moved onto a fourth pair of guides (25) comprised in said first guide means and disposed parallel and coplanar to a first pair of guides (24) comprised in said first guide means from the base of said intermediate zone (28) to said first work station (12).

16. Method as in claim 15, **characterized in that** it provides to move said support elements (11) between said first work station (12) and said second work station (15) along a closed path formed by an outward path from said first work station (12) to said second work station (15) and by a return path from the latter to said first work station (12); wherein said outward path comprises a first segment (T1) that lies on said first horizontal plane (P1) from said first work station (12) to said intermediate zone (28) and a second segment (T2) that lies on said second horizontal plane (P2) from said intermediate zone (28) to said second work station (15) and said return path comprises a first segment (T3) that lies on said second horizontal plane (P2) from said second work station (15) to said intermediate zone (28) and a second segment (T4) that lies on said first horizontal plane (P1) from said intermediate zone (28) to said first work station (12).

17. Method as in any of the claims from 15 or 16, **characterized in that** said step of stacking said support elements (11) in said intermediate zone (28) provides to lift one of said support elements (11) by second temporary support means (63, 64) to an intermediate position between said first horizontal plane (P1) and said second horizontal plane (P2) in order to form in said intermediate zone (28) a vertical stack of said support elements (11) in coordination with first temporary support means (36, 37) comprised in said movement means (29, 30) and configured to selectively cooperate with said support elements (11).

18. Method as in any of the claims from 15 to 17, **characterized in that** said movement of said support elements (11) between said first work station (12) and said second work station (15) provides to keep the sequential order of said support elements (11) during their movement along said closed path.

19. Method as in any of the claims from 15 to 18, **characterized in that** said movement of said support elements (11) between said first work station (12) and said second work station (15) along said closed path provides to move a constant number of said support elements (11).

## Patentansprüche

1. Vorrichtung zum Bewegen einer Mehrzahl von mobilen Halteelementen (11) zwischen einer ersten Arbeitsstation (12) und einer zweiten Arbeitsstation (15) entlang einer geschlossenen Bahn, wobei die Vorrichtung aufweist erste Führungsmittel (24, 25), die konfiguriert sind, um die Halteelemente (11), die zwischen den beiden Arbeitsstationen (12, 15) angeordnet sind, verschiebbar zu halten und zu führen entlang eines Segments (T1, T4) der Bahn, das in einer ersten horizontalen Ebene (P1) liegt, wobei die Vorrichtung ferner aufweist zweite Führungsmittel (26, 27), die konfiguriert sind, um die Halteelemente (11), die zwischen den beiden Arbeitsstationen (12, 15) angeordnet sind, verschiebbar zu halten und zu führen entlang eines anderen Segments (T2, T3) der Bahn, das in einer zweiten horizontalen Ebene (P2) liegt, die in einem Vertikalabstand (H) von der ersten horizontalen Ebene (P1) angeordnet ist, Bewegungsmittel (29, 30), die konfiguriert sind, um die Halteelemente (11) zwischen der ersten horizontalen Ebene (P1) und der zweiten horizontalen Ebene (P2) zu einer Zwischenzone (28) zu bewegen, die zwischen der ersten Arbeitsstation (12) und der zweiten Arbeitsstation (15) bereitgestellt ist und zwischen den beiden horizontalen Ebenen (P1, P2) liegt, wobei es in der Zwischenzone (28) bereitgestellt ist, die Halteelemente (11) zu heben oder abzusenken und gegebenenfalls vertikal zu stapeln, wobei die Zwischenzone (28) einen temporären Vertikalspeicher von den Halteelementen (11) definiert, wobei die ersten Führungsmittel (24, 25) zwischen der ersten Arbeitsstation (12) und dem unteren Abschnitt der Zwischenzone (28) angeordnet sind, der benachbart zu der ersten horizontalen Ebene (P1) angeordnet ist, und die zweiten Führungsmittel (26, 27) zwischen dem oberen Abschnitt der Zwischenzone (28), der benachbart zu der zweiten horizontalen Ebene (P2) angeordnet ist, und der zweiten Arbeitsstation (15) angeordnet sind, wobei die Vorrichtung eine Verschiebevorrichtung (78) aufweist, die am Ende der zweiten Arbeitsstation (15) angeordnet ist und einen Elektromotor (79) aufweist, der mit einem Schiebeelement (80) verknüpft ist, das an einer Führungsstange (81) verschiebbar ist, die quer angeordnet ist, um die Halteelemente (11), die in der zweiten horizontalen Ebene (P2) angeordnet sind, zu einem dritten Paar Führungen (27) zu verschieben, das in den zweiten Führungsmitteln (26, 27) vorliegt, wobei dritte Horizontalführungsmittel (76) bereitgestellt sind, um die Halteelemente (11) entlang dem ersten Segment (T3) der Rückkehrbahn zu den Bewegungsmitteln (29, 30) hin vorzurücken, die in der Zwischenzone angeordnet sind (28).

2. Vorrichtung gemäß Anspruch 1, **dadurch gekennzeichnet, dass** die Bewegungsmittel Hebemittel (29) aufweisen, die in der Zwischenzone (28) angeordnet sind, um die Halteelemente (11) zwischen der ersten horizontalen Ebene (P1) und der zweiten horizontalen Ebene (P2) selektiv anzuheben.

3. Vorrichtung gemäß Anspruch 2, **dadurch gekennzeichnet, dass** die Hebemittel (29) einen vertikal bewegbaren Schlitten (32) aufweisen, an dem erste Temporär-Haltemittel (36, 37) montiert sind, die konfiguriert sind, um selektiv mit den Halteelementen (11) zusammenzuwirken.

4. Vorrichtung gemäß Anspruch 3, **dadurch gekennzeichnet, dass** der Schlitten (32) einen ersten Betätigungsmechanismus (39) aufweist, der konfiguriert ist, um die ersten Temporär-Haltemittel (36, 37) selektiv näher zueinander oder weg voneinander zu bewegen zwischen einer Inaktivposition, in welcher sie nicht mit irgendeinem der Halteelemente (11) im Eingriff sind, und einer Arbeitsposition, in welcher sie mit einem der Halteelemente (11) im Eingriff sind, um es vertikal zu bewegen zwischen der ersten horizontalen Ebene (P1) und der zweiten horizontalen Ebene (P2).

5. Vorrichtung gemäß Anspruch 3 oder 4, **dadurch gekennzeichnet, dass** die Hebevorrichtung (29) einen vertikalen Pfosten (31) aufweist, der als eine Führung für den Schlitten (32) dient, wobei der Schlitten (32) eine Querplatte (33) aufweist, die mit Blöcken (34) versehen ist, um entlang vertikaler Führungen (33) des vertikalen Pfostens (31) verschiebbar zu sein, wobei zwei erste Temporär-Halteelemente (36, 37), die in einer L-Form gestaltet sind, querverschiebbar an der Querplatte (33) montiert sind, die in einer horizontalen Ebene liegen und von denen jedes einen Querabschnitt (36a, 37a) und einen Längsarm (36b, 37b) hat, der mit zwei Zähnen (38) versehen ist, die nach innen hin vorstehen und positioniert sind, um selektiv in jeweilige erste Löcher (19) einer Platte (17) einzutreten, die in den Halteelementen (11) vorliegt.

6. Vorrichtung gemäß irgendeinem vorigen Anspruch, **dadurch gekennzeichnet, dass** zweite Temporär-Haltemittel (63, 64) bereitgestellt sind, um die Halteelemente (11) temporär zu halten in einer Zwischenposition zwischen der ersten horizontalen Ebene (P1) und der zweiten horizontalen Ebene (P2), um in der Zwischenzone (28), in Koordination mit den Bewegungsmitteln (29), einen vertikalen Stapel von den Halteelementen (11) zu bilden.

7. Vorrichtung gemäß Anspruch 6, **dadurch gekennzeichnet, dass** jedes der zweiten Temporär-Haltemittel (63, 64) einen Betätigungsmechanismus (68) aufweist, der konfiguriert ist, um die zweiten Temporär-Haltemittel (63, 64) selektiv näher zueinander oder weg voneinander zu bewegen zwischen einer Inaktivposition, in welcher sie nicht mit irgendeinem der Halteelemente (11) im Eingriff sind, und einer Arbeitsposition, in welcher sie mit einem der Halteelemente (11) im Eingriff sind, um es in die Zwischenposition zu bewegen.

8. Vorrichtung gemäß Anspruch 6 oder Anspruch 7, wenn Anspruch 6 von Anspruch 5 abhängt, **dadurch gekennzeichnet, dass** jedes der zweiten Temporär-Haltemittel (63, 64) ein Paar L-förmiger Temporär-Haltemittel (65, 66) aufweist, die in einer vertikalen Ebene liegen und von denen jedes einen horizontalen Abschnitt (65a, 66a) und einen Längsarm (65b, 66b) hat, wobei jeder Längsarm (65b, 66b) mit zwei Zähnen (67) versehen ist, die zwischen den Zähnen (38) in einem Höhenabstand von den Letzteren angeordnet sind, nach innen hin vorstehen und positioniert sind, um selektiv in jeweilige zweite Löcher (20) der Platte (17) einzutreten.

9. Vorrichtung gemäß irgendeinem vorigen Anspruch, **dadurch gekennzeichnet, dass** ein Temporär-Haltemechanismus (52) im oberen Abschnitt der Zwischenzone (28) bereitgestellt ist, um jeweils eins der Halteelemente (11) temporär zu halten, die von den Bewegungsmitteln (29) in die zweite horizontale Ebene (P2) gebracht werden.

10. Vorrichtung gemäß irgendeinem vorigen Anspruch, **dadurch gekennzeichnet, dass** die ersten Führungsmittel ein erstes Paar Führungen (24) und ein viertes Paar Führungen (25) aufweisen, die parallel und koplanar zueinander sind, um die Halteelemente (11) in der ersten horizontalen Ebene (P1) zu führen, und die zweiten Führungsmittel ein zweites Paar Führungen (26) und ein drittes Paar Führungen (27) aufweisen, die parallel und koplaner zueinander angeordnet sind, um die Halteelemente (11) in der zweiten horizontalen Ebene (P2) zu führen.

11. Vorrichtung gemäß Anspruch 10, **dadurch gekennzeichnet, dass** das dritte Paar Führungen (27) parallel und koplanar zu dem zweiten Paar Führungen (26) angeordnet ist, um die Halteelemente (11) von der zweiten Arbeitsstation (15) aus zu der Zwischenzone (28) zu führen, und das vierte Paar Führungen (25) parallel und koplanar zu dem ersten Paar Führungen (24) angeordnet ist, um die Halteelemente (11) von der Zwischenzone (28) aus zu der ersten Arbeitsstation (12) zu führen.

12. Vorrichtung gemäß irgendeinem vorigen Anspruch, **dadurch gekennzeichnet, dass** die geschlossene Bahn gebildet ist durch eine Hinwärts-Bahn von der ersten Arbeitsstation (12) aus zu der zweiten Arbeitsstation (15) und durch eine Rückkehr-Bahn von der zweiten Arbeitsstation (15) aus zu der ersten Arbeitsstation (12), wobei die Hinwärts-Bahn aufweist ein erstes Segment (T1), das in der ersten horizontalen Ebene (P1) liegt von der ersten Arbeitsstation (12) aus zu der Zwischenzone (28), und ein zweites Segment (T2), das in der zweiten horizontalen Ebene (P2) liegt von der Zwischenzone (28) aus zu der zweiten Arbeitsstation (15), und die Rückkehr-Bahn aufweist ein erstes Segment (T3), das in der zweiten horizontalen Ebene (P2) liegt von der zweiten Arbeitsstation (15) aus zu der Zwischenzone (28), und ein zweites Segment (T4), das in der ersten horizontalen Ebene (P1) liegt von der Zwischenzone (28) aus zu der ersten Arbeitsstation (12).

13. Vorrichtung gemäß irgendeinem der Ansprüche von 10 bis 12, wenn Anspruch 12 von Anspruch 10 oder 11 abhängt, **dadurch gekennzeichnet, dass** die Bewegungsmittel Absenkmittel (30) aufweisen, die in der Zwischenzone (28) bereitgestellt sind zwischen dem dritten Paar Führungen (27) und dem vierten Paar Führungen (25), um die Halteelemente (11) selektiv abzusenken von der zweiten horizontalen Ebene (P2) aus zu der ersten horizontalen Ebene (P1).

14. Vorrichtung gemäß Anspruch 13 in Kombination mit irgendeinem der Ansprüche von 2 bis 12, **dadurch gekennzeichnet, dass** die Absenkmittel (30) dieselben wie die Hebemittel (29) sind.

15. Verfahren zum Bewegen einer Mehrzahl von bewegbaren Halteelementen (11) zwischen einer ersten Arbeitsstation (12) und einer zweiten Arbeitsstation (15) entlang einer geschlossenen Bahn, **dadurch gekennzeichnet, dass** es aufweist wenigstens einen ersten Schritt, in welchem die Halteelemente (11) durch erste Führungsmittel (24), die in einer ersten horizontalen Ebene (P1) liegen, zu einer Zwischenzone (28), die zwischen den beiden Arbeitsstationen (12, 15) liegt, geführt werden, einen zweiten Schritt, in welchem die Halteelemente (11) vertikal bewegt werden von Bewegungsmitteln (29, 30) in der Zwischenzone (28) zwischen der ersten horizontalen Ebene (P1) und einer zweiten horizontalen Ebene (P2), die in einem Vertikalabstand (H) von der ersten horizontalen Ebene (P1) angeordnet ist, um die Halteelemente (11) gegebenenfalls vertikal zu stapeln, definierend einen temporären Vertikalspeicher von den Halteelementen (11), einen dritten Schritt, in welchem die Halteelemente (11) geführt werden von den zweiten Führungsmitteln (26), die in der zweiten horizontalen Ebene (P2) liegen, von dem oberen Abschnitt der Zwischenzone (28) aus zu der zweiten Arbeitsstation (15) hin, einen vierten Schritt, in welchem die Halteelemente (11), die in der zweiten horizontalen Ebene (P2) stromabwärts der zweiten Arbeitsstation (15) vorliegen, verschoben werden von einer Verschiebevorrichtung (78), die am Ende der zweiten Arbeitsstation (15) angeordnet ist, zu einem dritten Paar Führungen (27) hin, das in den zweiten Führungsmitteln vorliegt und parallel und koplanar zu einem zweiten Paar Führungen (26) angeordnet ist, das in den zweiten Führungsmitteln vorliegt, um die Halteelemente (11) in einem Segment (T3) der Rückkehr-Bahn von der zweiten Arbeitsstation (15) aus zum oberen Abschnitt der Zwischenzone (28) zu führen, und einen fünften Schritt, in welchem die Halteelemente (11) vertikal bewegt werden zwischen der zweiten horizontalen Ebene (P2) und der ersten horizontalen Ebene (P1) und dann bewegt werden zu einem vierten Paar Führungen (25), das in den ersten Führungsmitteln vorliegt und parallel und koplanar zu einem ersten Paar Führungen (24) angeordnet ist, das in den ersten Führungsmitteln vorliegt, von dem unteren Abschnitt der Zwischenzone (28) aus zu der ersten Arbeitsstation (12).

16. Verfahren gemäß Anspruch 15, **dadurch gekennzeichnet, dass** es bereitstellt, die Halteelemente (11) zwischen der ersten Arbeitsstation (12) und der zweiten Arbeitsstation (15) zu bewegen entlang einer geschlossenen Bahn, die von einer Hinwärts-Bahn von der ersten Arbeitsstation (12) aus zu der zweiten Arbeitsstation (15) und von einer Rückwärts-Bahn von der Letzteren aus zu der ersten Arbeitsstation (12) gebildet wird, wobei die Hinwärts-Bahn aufweist ein erstes Segment (T1), das in der ersten horizontalen Ebene (P1) liegt von der ersten Arbeitsstation (12) aus zu der zweiten Zwischenzone (28), und ein zweites Segment (T2), das in der zweiten horizontalen Ebene (P2) liegt von der Zwischenzone (28) aus zu der zweiten Arbeitsstation (15), und die Rückkehr-Bahn aufweist ein erstes Segment (T3), das in der zweiten horizontalen Ebene (P2) liegt von der zweiten Arbeitsstation (15) aus zu der Zwischenzone (28), und ein zweites Segment (T4), das in der ersten horizontalen Ebene (P1) liegt von der Zwischenzone (28) aus zu der ersten Arbeitsstation (12) .

17. Verfahren gemäß irgendeinem der Ansprüche von 15 oder 16, **dadurch gekennzeichnet, dass** der Schritt des Stapelns der Halteelemente (11) in der Zwischenzone (28) bereitstellt, eines der Halteelemente (11) anzuheben durch zweite Temporär-Haltemittel (63, 64) in eine Zwischenposition zwischen der ersten horizontalen Ebene (P1) und der zweiten horizontalen Ebene (P2), um in der Zwischenzone (28) einen vertikalen Stapel von den Halteelementen (11) in Koordination mit ersten Temporär-Haltemitteln (36, 37) zu bilden, die in den Bewegungsmitteln (29, 30) vorliegen und konfiguriert sind, um selektiv mit den Halteelementen (11) zusammenzuwirken.

18. Verfahren gemäß irgendeinem der Ansprüche von 15 bis 17, **dadurch gekennzeichnet, dass** die Bewegung der Halteelemente (11) zwischen der ersten Arbeitsstation (12) und der zweiten Arbeitsstation (15) bereitstellt, die sequentielle Reihenfolge der Halteelemente (11) während deren Bewegung entlang der geschlossenen Bahn beizubehalten.

19. Verfahren gemäß irgendeinem der Ansprüche von 15 bis 18, **dadurch gekennzeichnet, dass** die Bewegung der Halteelemente (11) zwischen der ersten Arbeitsstation (12) und der zweiten Arbeitsstation (15) entlang der geschlossenen Bahn bereitstellt, eine konstante Anzahl von den Halteelementen (11) zu bewegen.

## Revendications

1. Appareil pour déplacer une pluralité d'éléments de support mobiles (11) entre un premier poste de travail (12) et un second poste de travail (15) le long d'un trajet fermé, ledit appareil comprenant des premiers moyens de guidage (24, 25) configurés pour supporter et guider de manière coulissante lesdits éléments de support (11) disposés entre lesdits deux postes de travail (12, 15) le long d'un segment (T1, T4) dudit trajet s'étendant sur un premier plan horizontal (P1) ; ledit appareil comprend également des deuxièmes moyens de guidage (26, 27) configurés pour supporter et guider de manière coulissante lesdits éléments de support (11) disposés entre lesdits deux postes de travail (12, 15) le long d'un autre segment (T2, T3) dudit trajet s'étendant sur un second plan horizontal (P2) situé à une distance verticale (H) dudit premier plan horizontal (P1), des moyens de déplacement (29, 30) configurés pour déplacer lesdits éléments de support (11) entre ledit premier plan horizontal (P1) et ledit second plan horizontal (P2) vers une zone intermédiaire (28) prévue entre ledit premier poste de travail (12) et ledit second poste de travail (15) et comprise entre lesdits deux plans horizontaux (P1, P2), il est prévu, dans ladite zone intermédiaire (28), de lever ou d'abaisser, et éventuellement d'empiler verticalement lesdits éléments de support (11), ladite zone intermédiaire (28) définissant un stockage vertical temporaire desdits éléments de support (11), lesdits premiers moyens de guidage (24, 25) étant disposés entre ledit premier poste de travail (12) et la base de ladite zone intermédiaire (28) disposée à proximité dudit premier plan horizontal (P1), et lesdits deuxièmes moyens de guidage (26, 27) étant disposés entre la partie supérieure de ladite zone intermédiaire (28) disposée à proximité dudit second plan horizontal (P2) et dudit second poste de travail (15) ; où ledit appareil comprend un dispositif de translation (78) disposé à l'extrémité dudit second poste de travail (15) et comprenant un moteur électrique (79) associé à un élément de poussée (80) pouvant coulisser sur une barre de guidage (81) disposée transversalement, pour translater lesdits éléments de support (11) situés sur ledit second plan horizontal (P2) vers une troisième paire de guides (27) compris dans lesdits deuxièmes moyens de guidage (26, 27), où des troisièmes moyens d'alimentation horizontaux (76) sont prévus pour faire avancer lesdits éléments de support (11) le long du premier segment (T3) du trajet de retour vers lesdits moyens de déplacement (29, 30) situés dans ladite zone intermédiaire (28).

2. Appareil selon la revendication 1, **caractérisé en ce que** lesdits moyens de déplacement comprennent des moyens de levage (29) qui sont disposés dans ladite zone intermédiaire (28) pour lever sélectivement lesdits éléments de support (11) entre ledit premier plan horizontal (P1) et ledit second plan horizontal (P2).

3. Appareil selon la revendication 2, **caractérisé en ce que** lesdits moyens de levage (29) comprennent un coulisseau mobile verticalement (32) sur lequel des premiers moyens de support temporaires (36, 37) sont montés, configurés pour coopérer sélectivement avec lesdits éléments de support (11).

4. Appareil selon la revendication 3, **caractérisé en ce que** ledit coulisseau (32) comprend un premier mécanisme d'actionnement (39) configuré pour déplacer sélectivement lesdits premiers moyens de support temporaires (36, 37) plus proches ou éloignés l'un de l'autre, entre une position inactive, où ils ne sont en prise avec aucun desdits éléments de support (11), et une position de travail, où ils sont en prise avec l'un desdits éléments de support (11) afin de le déplacer verticalement entre ledit premier plan horizontal (P1) et ledit second plan horizontal (P2).

5. Appareil selon la revendication 3 ou 4, **caractérisé en ce que** ledit dispositif de levage (29) comprend un montant vertical (31) qui sert de guide audit coulisseau (32), ledit coulisseau (32) comprend une plaque transversale (33) munie de blocs (34) pour coulisser le long de guides verticaux (33) dudit montant vertical (31) ; deux premiers éléments de support temporaires (36, 37) conformés en forme de L, sont montés, coulissant transversalement, sur ladite plaque transversale (33), s'étendant sur un plan horizontal et ayant chacun une partie transversale (36a, 37a) et un bras longitudinal (36b, 37b) muni de deux dents (38) faisant saillie vers l'intérieur et positionnées de manière à pénétrer sélectivement dans des premiers creux respectifs (19) d'une plaque (17) comprise dans lesdits éléments de support (11).

6. Appareil selon l'une quelconque des revendications précédentes, **caractérisé en ce que** des deuxièmes moyens de support temporaires (63, 64) sont prévus pour supporter temporairement lesdits éléments de support (11) dans une position intermédiaire entre ledit premier plan horizontal (P1) et ledit second plan horizontal (P2) afin de former sur ladite zone intermédiaire (28), en coordination avec lesdits moyens de déplacement (29), une pile verticale desdits éléments de support (11).

7. Appareil selon la revendication 6, **caractérisé en ce que** chacun desdits deuxièmes moyens de support temporaires (63, 64) comprend un mécanisme d'actionnement (68), configuré pour déplacer sélectivement lesdits deuxièmes moyens de support temporaires (63, 64) plus proches ou éloignés l'un de l'autre, entre une position inactive, où ils ne sont en prise avec aucun desdits éléments de support (11), et une position de travail, où ils sont en prise avec l'un desdits éléments de support (11) afin de le déplacer dans ladite position intermédiaire.

8. Appareil selon la revendication 6, ou la revendication 7 lorsque la revendication 6 dépend de la revendication 5, **caractérisé en ce que** chacun desdits deuxièmes moyens de support temporaires (63, 64) comprend une paire d'éléments de support temporaires en forme de L (65, 66), s'étendant sur un plan vertical et ayant chacun une partie horizontale (65a, 66a), et un bras longitudinal (65b, 66b), chaque bras longitudinal (65b, 66b) étant pourvu de deux dents (67), disposées entre lesdites dents (38), espacées en hauteur de celles-ci, faisant saillie vers l'intérieur et positionnées de manière à pénétrer sélectivement dans des seconds creux respectifs (20) de ladite plaque (17).

9. Appareil selon l'une quelconque des revendications précédentes, **caractérisé en ce qu'**un mécanisme de support temporaire (52) est prévu dans la partie supérieure de ladite zone intermédiaire (28) pour supporter temporairement, un à la fois, lesdits éléments de support (11) pris par lesdits moyens de déplacement (29) sur ledit second plan horizontal (P2).

10. Appareil selon l'une quelconque des revendications précédentes, **caractérisé en ce que** lesdits premiers moyens de guidage comprennent une première paire de guides (24) et une quatrième paire de guides (25), parallèles et coplanaires l'un par rapport à l'autre, pour guider lesdits éléments de support (11) sur ledit premier plan horizontal (P1), et lesdits deuxièmes moyens de guidage comprennent une deuxième paire de guides (26) et une troisième paire de guides (27) disposés parallèles et coplanaires l'un par rapport à l'autre, pour guider lesdits éléments de support (11) sur ledit second plan horizontal (P2).

11. Appareil selon la revendication 10, **caractérisé en ce que** ladite troisième paire de guides (27) est disposée parallèlement et coplanairement à ladite deuxième paire de guides (26) pour guider lesdits éléments de support (11) dudit second poste de travail (15) à ladite zone intermédiaire (28), et ladite quatrième paire de guides (25) est disposée parallèlement et coplanairement à ladite première paire de guides (24) pour guider lesdits éléments de support (11) de ladite zone intermédiaire (28) audit premier poste de travail (12).

12. Appareil selon l'une quelconque des revendications précédentes, **caractérisé en ce que** ledit trajet fermé est formé par un trajet vers l'extérieur dudit premier poste de travail (12) audit second poste de travail (15) et par un trajet de retour dudit second poste de travail (15) audit premier poste de travail (12) ; où ledit trajet vers l'extérieur comprend un premier segment (T1) qui s'étend sur ledit premier plan horizontal (P1) dudit premier poste de travail (12) à ladite zone intermédiaire (28) et un second segment (T2) qui s'étend sur ledit second plan horizontal (P2) de ladite zone intermédiaire (28) audit second poste de travail (15) et ledit trajet de retour comprend un premier segment (T3) qui s'étend sur ledit second plan horizontal (P2) dudit second poste de travail (15) à ladite zone intermédiaire (28) et un second segment (T4) qui s'étend sur ledit premier plan horizontal (P1) de ladite zone intermédiaire (28) audit premier poste de travail (12).

13. Appareil selon l'une quelconque des revendications 10 à 12, lorsque la revendication 12 dépend de la revendication 10 ou 11, **caractérisé en ce que** lesdits moyens de déplacement comprennent des moyens d'abaissement (30), qui sont prévus dans ladite zone intermédiaire (28), entre ladite troisième paire de guides (27) et ladite quatrième paire de guides (25), afin d'abaisser sélectivement lesdits éléments de support (11) dudit second plan horizontal (P2) audit premier plan horizontal (P1).

14. Appareil selon la revendication 13 en combinaison avec l'une quelconque des revendications de 2 à 12, **caractérisé en ce que** lesdits moyens d'abaissement (30) sont les mêmes desdits moyens de levage (29).

15. Procédé pour déplacer une pluralité d'éléments de support mobiles (11) entre un premier poste de travail (12) et un second poste de travail (15) le long d'un trajet fermé, **caractérisé en ce qu'**il comprend au moins une première étape où lesdits éléments de support (11) sont guidés par des premiers moyens de guidage (24) s'étendant sur un premier plan horizontal (P1) vers une zone intermédiaire (28) comprise entre lesdits deux postes de travail (12, 15), une deuxième étape où lesdits éléments de support (11) sont déplacés verticalement par des moyens de déplacement (29, 30) dans ladite zone intermédiaire (28) entre ledit premier plan horizontal (P1) et un second plan horizontal (P2) situé à une distance verticale (H) dudit premier plan horizontal (P1), afin d'empiler éventuellement lesdits éléments de support (11) verticalement, définissant un stockage vertical temporaire desdits éléments de support (11), une troisième étape où lesdits éléments de support (11) sont guidés par lesdits deuxièmes moyens de guidage (26) s'étendant sur ledit second plan horizontal (P2) à partir de la partie supérieure de ladite zone intermédiaire (28) vers ledit second poste de travail (15), une quatrième étape où lesdits éléments de support (11) qui sont sur ledit second plan horizontal (P2) en aval dudit second poste de travail (15) sont translatés, par un dispositif de translation (78) disposé à l'extrémité dudit second poste de travail (15), vers une troisième paire de guides (27) compris dans lesdits deuxièmes moyens de guidage et disposés parallèlement et coplanairement à une deuxième paire de guides (26) compris dans lesdits deuxièmes moyens de guidage pour guider lesdits éléments de support (11) sur un segment (T3) du trajet de retour dudit second poste de travail (15) à la partie supérieure de ladite zone intermédiaire (28), et une cinquième étape où lesdits éléments de support (11) sont déplacés verticalement entre ledit second plan horizontal (P2) et ledit premier plan horizontal (P1), puis déplacés sur une quatrième paire de guides (25) compris dans lesdits premiers moyens de guidage et disposés parallèlement et coplanairement à une première paire de guides (24) compris dans lesdits premiers moyens de guidage de la base de ladite zone intermédiaire (28) audit premier poste de travail (12).

16. Procédé selon la revendication 15, **caractérisé en ce qu'**il prévoit de déplacer lesdits éléments de support (11) entre ledit premier poste de travail (12) et ledit second poste de travail (15) le long d'un trajet fermé formé par un trajet vers l'extérieur depuis ledit premier poste de travail (12) vers ledit second poste de travail (15) et par un trajet de retour depuis ce dernier vers ledit premier poste de travail (12) ; où ledit trajet vers l'extérieur comprend un premier segment (T1) qui s'étend sur ledit premier plan horizontal (P1) depuis ledit premier poste de travail (12) vers ladite zone intermédiaire (28) et un second segment (T2) qui s'étend sur ledit second plan horizontal (P2) depuis ladite zone intermédiaire (28) vers ledit second poste de travail (15) et ledit trajet de retour comprend un premier segment (T3) qui s'étend sur ledit second plan horizontal (P2) depuis ledit second poste de travail (15) vers ladite zone intermédiaire (28) et un second segment (T4) qui s'étend sur ledit premier plan horizontal (P1) depuis ladite zone intermédiaire (28) vers ledit premier poste de travail (12).

17. Procédé selon l'une quelconque des revendications 15 ou 16, **caractérisé en ce que** ladite étape consistant à empiler lesdits éléments de support (11) dans ladite zone intermédiaire (28) prévoit de lever l'un desdits éléments de support (11) par des deuxièmes moyens de support temporaires (63, 64) jusqu'à une position intermédiaire entre ledit premier plan horizontal (P1) et ledit second plan horizontal (P2) afin de former dans ladite zone intermédiaire (28) une pile verticale desdits éléments de support (11) en coordination avec des premiers moyens de support temporaires (36, 37) compris dans lesdits moyens de déplacement (29, 30) et configurés pour coopérer sélectivement avec lesdits éléments de support (11).

18. Procédé selon l'une quelconque des revendications 15 à 17, **caractérisé en ce que** ledit déplacement desdits éléments de support (11) entre ledit premier poste de travail (12) et ledit second poste de travail (15) assure le maintien de l'ordre séquentiel desdits éléments de support (11) pendant leur déplacement le long dudit trajet fermé.

19. Procédé selon l'une quelconque des revendications 15 à 18, **caractérisé en ce que** ledit déplacement desdits éléments de support (11) entre ledit premier poste de travail (12) et ledit second poste de travail (15) le long dudit trajet fermé permet de déplacer un nombre constant desdits éléments de support (11).
